# FASCICULE DE BREVET EUROPEEN

(11) **EP 3 404 463 B1**
(45) Date de publication et mention de la délivrance du brevet: **30.10.2019**
(21) Numéro de dépôt: 18172268.7
(22) Date de dépôt: 15.05.2018
(51) Int. Cl.: G02B 17/06, G02B 23/06, G02B 27/00

(54) **TÉLESCOPE ANASTIGMATE BIFOCAL À CINQ MIROIRS**
FÜNFSPIEGELIGES ANASTIGMATISCHES BIFOKALES TELESKOP
BIFOCAL ANASTIGMATIC TELESCOPE WITH FIVE MIRRORS

(30) Priorité: 18.05.2017 FR 1700525
(43) Date de publication de la demande: 21.11.2018
(73) Titulaire: THALES, 92400 Courbevoie (FR)
(72) Inventeur: TETAZ, Nicolas, 06156 CANNES (FR); RUILIER, Cyril, 06156 CANNES (FR)
(74) Mandataire: Joubert, Cécile

(56) Documents cités:
- US-A- 6 084 727
- US-B1- 6 333 811
- US-B1- 9 354 116
- Dietrich Korsch: "Reflective Optics, Ch. 10: Third-order correction of multimirror systems" In: "REFLECTIVE OPTICS", 1 janvier 1991 (1991-01-01), ACADEMIC PRESS LIMITED, LONDON, XP055458422, ISBN: 978-0-12-421170-4 pages 261-264, * le document en entier *

## Description

### DOMAINE DE L'INVENTION

Le domaine de l'invention est celui des télescopes, notamment celui des télescopes d'observations embarqués dans des satellites. Plus précisément, le domaine de l'invention concerne les systèmes catoptriques à grandes focales, plus particulièrement bifocal.

### ETAT DE LA TECHNIQUE

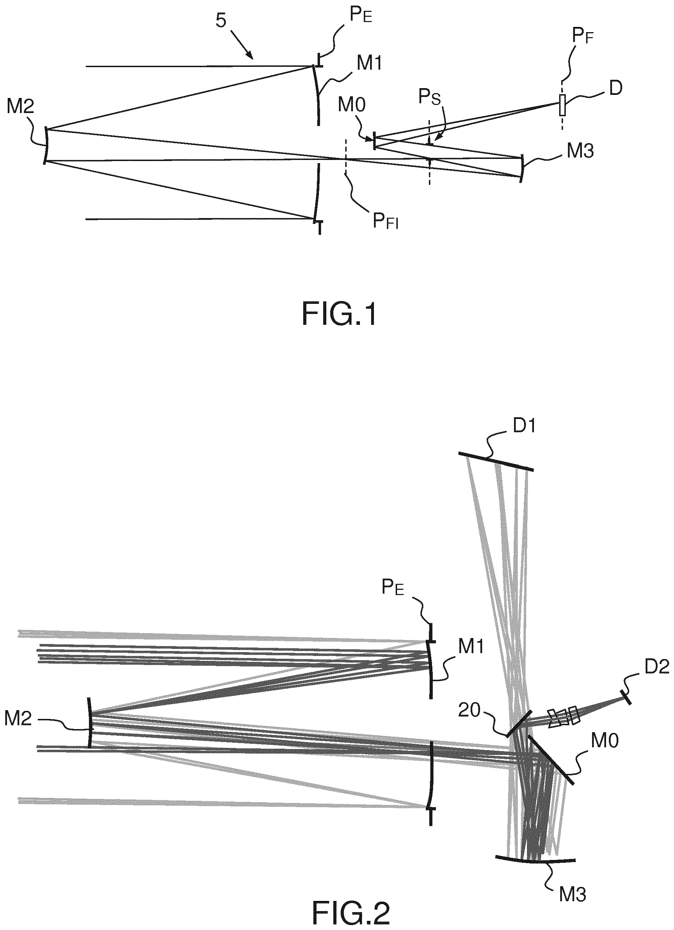

Les télescopes spatiaux actuels sont à focale unique. Un type de télescope connu est le télescope de type Korsch à 3 miroirs tel qu'illustré figure 1. Le télescope de type Korsch, également dénommé TMA (acronyme de l'expression anglo-saxonne « Three Mirors Anastigmat ») est un télescope monofocal anastigmat à trois miroirs asphériques (Concave-Convexe-Concave) qui comprend au moins un premier miroir M1 concave, un second miroir M2 convexe et un troisième miroir M3 concave. Les premier, deuxième et troisième miroirs M1, M2 et M3 sont asphériques, de formes fixes, chaque miroir étant caractérisé par au moins deux paramètres, un rayon de courbure R et une conique c.
Les trois miroirs M1, M2 et M3 sont agencés de sorte que le premier miroir et le second miroir forment d'un objet à l'infini une image intermédiaire disposée dans un plan intermédiaire P_{FI} situé entre le second miroir M2 et le troisième miroir M3, le troisième miroir formant de cette image intermédiaire une image finale dans le plan focal du télescope P_{F}, dans lequel est placé un détecteur D. Un miroir de renvoi M0 permet de replier le faisceau pour diminuer l'encombrement. L'image finale dans le plan P_{F} n'est pas inversée. Le télescope présente de manière classique une pupille d'entre P_{E} et une pupille de sortie P_{S}.
Par application des équations de Korsch bien connues de l'homme de l'art on calcule aisément les positions et paramètres respectifs des trois miroirs. La solution théorique est de très bonne qualité sur un champ relativement important, et compacte, ce qui fait tout l'intérêt de ce type de télescope, particulièrement bien adapté pour réaliser des systèmes à longue focale (>5000 mm) et grande pupille (>300 mm).

Par ailleurs il peut être intéressant de pouvoir changer la focale en vol. En effet, changer la focale en vol permet de changer le champ de vue et/ou la résolution de l'image avec un seul et même instrument. Une solution bifocale est déjà intéressante.

Les équations de Korsch à 3 miroirs ne permettent pas d'obtenir une solution achromatique et anastigmate pour deux focales différentes à partir d'une même combinaison de miroirs M1/M2/M3.

Il existe plusieurs types d'instruments bifocaux.
Un premier type repose sur la séparation d'une voie commune en deux voies de focale différente par un composant séparateur 20 tel qu'illustré figure 2. Chaque voie a alors un détecteur dédié, dans l'exemple D1 pour la focale courte et D2 pour la focale longue.
La séparation peut se faire de manière spectrale, par exemple visible et IR, le composant 20 est alors une lame dichroïque. La séparation peut également être réalisée pour un même domaine de longueur d'onde, par une lame séparatrice (par exemple 50/50).
Ce premier type de système présente l'avantage d'avoir les deux focales en simultané et un champ commun d'observation. Cependant, des composants spécifiques doivent être ajoutés sur chaque voie, y compris les détecteurs, et pour une voie donnée, une partie du flux est perdue.

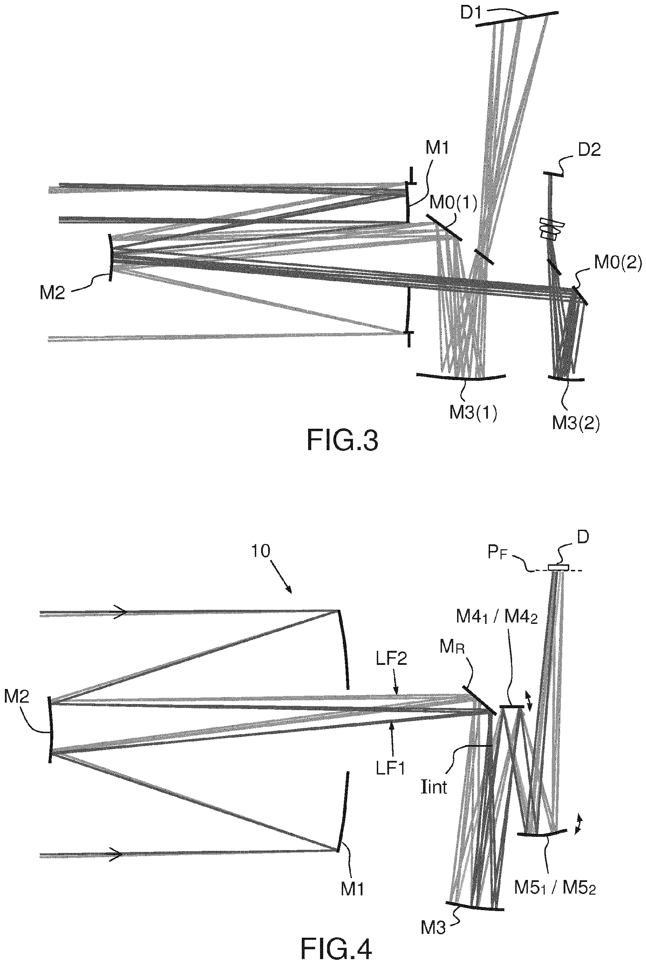

Un deuxième type effectue une séparation dans le champ de vue, tel qu'illustré figure 3. Il s'agit d'une solution bifocal en simultané mais les deux voies n'ont donc pas le même champ de vue et il faut jouter des composants optiques sur chaque voie, un miroir de renvoi M0(1), M0(2), un troisième miroir M3(1), M3(2) et un détecteur D1, D2.
Un troisième type de système décrit dans le document US6084727 permet de changer la focale par insertion dans le trajet optique d'éléments réflectifs. On a alors un seul détecteur et les deux voies ont un champ commun, mais il faut ajouter 3 miroirs spécifiques à l'une des voies, certains pouvant avoir des dimensions très importantes. De plus la fonction bifocale n'est pas simultanée

Un quatrième type de système consiste à réaliser une focale variable par déplacement d'un miroir, tel que décrit dans le document US6333811. Ce document est basé sur un télescope de type Cassegrain avec reprise d'image. Dans une architecture de type Korsch il conviendrait d'ajouter un miroir additionnel de correction pour chaque focale, ainsi que des moyens de déplacement du détecteur ou des moyens de variation du chemin optique sur une des focales. Mais cette solution présente le désavantage de nécessiter le déplacement du miroir de grande dimension M3 pour faire varier la focale.

Le document US9354116 décrit un spectromètre présentant une architecture optique de type 5MA monofocale.

Un but de la présente invention est de palier aux inconvénients précités en proposant un télescope permettant de conserver les avantages d'une architecture de type Korsch classique TMA (aplanétisme et astigmatisme sur un grand champ, compacité, mono-détecteur) et présentant une fonction bifocale obtenue sans déplacement d'un des miroirs faisant partie de la combinaison optique du système d'imagerie.

### DESCRIPTION DE L'INVENTION

La présente invention a pour objet un télescope anastigmat bifocal à cinq miroirs asphériques comprenant :
- un premier miroir concave, un second miroir convexe, un troisième miroir concave et un premier détecteur, communs à une première et une deuxième focale du télescope,
- un premier quatrième miroir et un premier cinquième miroir associés à la première focale, et un deuxième quatrième miroir et un deuxième cinquième miroir associés à la deuxième focale,
   le quatrième et le cinquième miroir associé à une focale étant escamotables, de manière à être disposés sur un chemin optique d'un faisceau correspondant à ladite focale associée lorsque le télescope fonctionne à ladite focale, et en dehors du chemin optique d'un faisceau correspondant à l'autre focale lorsque le télescope fonctionne à l'autre focale,

- les premier miroir et le second miroir étant agencés de manière à former d'un objet à l'infini une image intermédiaire située entre le second miroir et le troisième miroir,
- et pour chaque focale :
   * le troisième miroir ainsi que le quatrième et le cinquième miroir associés à ladite focale étant configurés pour former de cette image intermédiaire une image finale dans un premier plan focal du télescope commun aux deux focales et dans lequel est placé le premier détecteur,
   *les formes et positions fixes de chaque miroir étant déterminées à partir des équations de Korsch généralisées à 5 miroirs, avec la contrainte du premier, deuxième et troisième miroir et du premier plan focal communs aux deux focales, et de manière à optimiser la qualité d'image dans le premier plan focal du télescope selon un critère prédéterminé.

Selon un mode de réalisation les premier et deuxième quatrième miroirs sont disposés sensiblement à une même position, et/ou les premier et deuxième cinquième miroirs sont disposés sensiblement à une même position. Préférentiellement dans ce mode de réalisation les premier et deuxième quatrième miroirs sont montés sur un premier support unique, la commutation s'opérant par rotation autour d'un premier axe, et/ou les premier et deuxième cinquième miroirs sont montés sur un deuxième support unique, la commutation s'opérant par rotation autour d'un deuxième axe.

Avantageusement le premier quatrième miroir et le deuxième quatrième miroir présentent un rayon de courbure supérieur à 1000 mm.

Avantageusement le critère prédéterminé consiste à minimiser une erreur de forme d'onde.

Selon un mode de réalisation lesdits premier et deuxième quatrième miroirs escamotables sont montés sur un support unique, ledit support comprenant en outre une position pour laquelle aucun des quatrième miroir escamotable ne figure sur le chemin optique du faisceau incident sur ledit support, le faisceau passant alors au travers du support selon un chemin optique secondaire, le télescope comprenant en outre :
- un dispositif optique disposé sur le chemin optique secondaire, le dispositif optique étant configuré pour former de ladite image intermédiaire, en combinaison avec le troisième miroir, une image finale sur un deuxième plan focal du télescope correspondant à une focale choisie et pour optimiser la qualité d'image dans le deuxième plan focal selon ledit critère prédéterminé,
- et comprenant en outre un deuxième détecteur disposé dans le deuxième plan focal du télescope, et sensible dans une deuxième bande spectrale différente d'une première bande spectrale de sensibilité du premier détecteur.

Préférentiellement le dispositif optique fonctionne en transmission dans la deuxième bande spectrale.
Avantageusement la première bande spectrale est comprise dans le visible et la deuxième bande spectrale est comprise dans l'infrarouge.

Avantageusement la focale choisie présente une valeur inférieure aux première et deuxième focales.

Selon un autre aspect l'invention concerne un procédé de détermination de combinaisons optiques d'un télescope bifocal anastigmat à cinq miroirs asphérique, le télescope comprenant :
- un premier miroir, un second miroir et un troisième miroir et un premier détecteur disposé dans un premier plan focal communs à une première et une deuxième focale du télescope,
- un premier quatrième miroir et un premier cinquième miroir associés à la première focale, les formes et positions respectives des premier, deuxième, troisième, premier quatrième et premier cinquième miroirs formant une première combinaison optique associée à la première focale,
- un deuxième quatrième miroir et un deuxième cinquième miroir associés à une deuxième focale , les formes et positions respectives des premier, deuxième, troisième, deuxième quatrième et deuxième cinquième miroirs formant une deuxième combinaison optique associée à la deuxième focale, le procédé comprenant les étapes consistant à :
   - A déterminer, à partir des équations de Korsch généralisées à 5 miroirs, une première combinaison optique initiale pour la première focale,
      le premier miroir étant concave, le second miroir étant convexe, le troisième miroir étant concave, le premier et le second miroirs étant configurés de sorte qu'ils forment d'un objet à l'infini une image intermédiaire située entre le second miroir et le troisième miroir,
      le troisième, le premier quatrième et le premier cinquième miroirs étant configurés pour former de ladite image intermédiaire une image dans un premier plan focal initial du télescope en optimisant la qualité d'image dans ledit premier plan focal initial selon un critère prédéterminé,
   - B déterminer, à partir de la première combinaison optique initiale et des équations de Korsch généralisées à 5 miroirs, une deuxième combinaison optique initiale pour la deuxième focale, en modifiant les formes et/ou les positions desdits troisième, premier quatrième et premier cinquième miroirs déterminés à l'étape A, de manière à former de ladite image intermédiaire une image dans un deuxième plan focal initial du télescope en optimisant la qualité d'image dans ledit deuxième plan focal initial selon ledit critère prédéterminé,
   - C déterminer, à partir des première et deuxième combinaisons optiques initiales, une première et une deuxième combinaison optique finale par une boucle d'optimisation, avec la contrainte du premier, deuxième et troisième miroirs et du premier plan focal communs aux deux focales, et de manière à optimiser la qualité d'image dans ledit premier plan focal du télescope selon un critère prédéterminé.

Préférentiellement les formes respectives du premier quatrième et du premier cinquième miroir déterminés à l'étape A sont imposées sphériques.

Avantageusement la première focale est la focale la plus longue.

Préférentiellement une forme de miroir est définie par au moins un rayon de courbure et une conique, et les modifications de l'étape B consistent, pour le troisième miroir, en la modification de sa conique uniquement, soit sans modifier son rayon de courbure ni sa position.

Selon une variante l'étape C s'effectue avec la contrainte additionnelle des positions des premiers et deuxième quatrième miroirs égales, et des positions des premiers et deuxième cinquième miroirs égales.

Avantageusement le critère prédéterminé consiste à minimiser une erreur de forme d'onde.

D'autres caractéristiques, buts et avantages de la présente invention apparaîtront à la lecture de la description détaillée qui va suivre et en regard des dessins annexés donnés à titre d'exemples non limitatifs et sur lesquels :
La figure 1 déjà citée illustre une architecture de type Korsch à 3 miroirs classiques.
La figure 2 déjà citée décrit un premier type de système bifocal selon l'état de la technique à l'aide d'un composant optique séparateur et présentant deux détecteurs.
La figure 3 déjà citée illustre un deuxième type de système bifocal selon l'état de la technique à séparation par le champ.
La figure 4 illustre un télescope selon l'invention.
La figure 5 illustre un autre mode de réalisation d'un télescope selon l'invention dans lequel le miroir de renvoi est disposé différemment.
La figure 6 illustre une variante du télescope selon l'invention qui comprend une voie additionnelle fonctionnant dans une plage de longueur d'onde différente de la plage de fonctionnement de la voie principale du télescope.
La figure 7 illustre un support unique pour les premier et deuxième quatrième miroirs escamotables, adapté à la variante du télescope de la figure 6.
La figure 8 illustre le procédé de calcul de combinaisons optiques de télescope selon l'invention.
La figure 9 illustre la première combinaison initiale issue de l'étape A du procédé selon l'invention.
La figure 10 illustre la deuxième combinaison initiale issue de l'étape B du procédé selon l'invention.
La figure 11 illustre un exemple des valeurs calculées pour les première et deuxième combinaisons initiales d'un télescope issues respectivement de l'étape A et de l'étape B du procédé selon l'invention.
La figure 12 illustre un exemple de combinaison finale d'un télescope selon l'invention issu du procédé selon l'invention.
La figure 13 illustre des valeurs calculées pour les première et deuxième combinaisons finales à partir des valeurs des combinaisons CO1i et CO2i de la figure 11.

### DESCRIPTION DETAILLEE DE L'INVENTION

Un télescope anastigmat bifocal 10 à cinq miroirs selon l'invention est illustré figure 4. Il présente une première focale f1 et une deuxième focale f2 et comprend un premier miroir M1 concave, un second miroir M2 convexe, un troisième miroir M3 concave et un premier détecteur D, communs à f1 et f2. Les miroirs M1 et M2 qu'ils forment d'un objet à l'infini une image intermédiaire lint située entre M2 et le M3.
M1 et M2 sont agencés selon la configuration d'un Korsch à 3 miroirs tel que décrit dans l'état de la technique, et la forme du miroir M3 est légèrement modifiée par rapport au Korsch 3 miroirs correspondant comme il est décrit plus loin.
Le télescope 10 comprend également un premier quatrième miroir M4₁ et un premier cinquième miroir M5₁ associés à f1, et un deuxième quatrième miroir M4₂ et un deuxième cinquième miroir M5₂ associés à f2.
Le quatrième miroir et le cinquième miroir associé à une focale (f1 ou f2) sont escamotables, de manière à être disposés sur le chemin optique du faisceau lumineux correspondant à ladite focale associée lorsque le télescope fonctionne à ladite focale, et en dehors du chemin optique d'un faisceau correspondant à l'autre focale lorsque le télescope fonctionne à l'autre focale. Le premier faisceau lumineux LF1 correspondant à l'utilisation à f1 et le deuxième faisceau lumineux LF2 correspondant à l'utilisation à f2 focales partagent ainsi sensiblement un même chemin optique comme illustré figure 4.
En d'autres termes, le télescope présente une première combinaison optique OC1 pour la focale f1 constituée des formes et positions respectives de M1/M2/M3/M4₁/M5₁ et une deuxième combinaison optique OC2 : M1/M2/M3/M4₂/M5₂ pour la focale f2. On passe de OC1 à OC2 en escamotant les miroirs M4 et M5 de la focale non utilisée et en positionnant les miroirs M4 et M5 de la focale utilisée sur le chemin du faisceau lumineux incident.
En outre pour chaque focale le troisième miroir M3 ainsi que le quatrième et le cinquième miroir associés à ladite focale sont configurés pour former de cette image intermédiaire lint une image finale dans un premier plan focal P_{F} du télescope commun aux deux focales f1 et f2 et dans lequel est placé le premier détecteur D.
La forme et la position de chaque miroir sont fixes. Elles sont déterminées à partir des équations de Korsch généralisées à 5 miroirs avec la contrainte de M1, M2, M3 et P_{F} communs aux deux focales, et de manière à optimiser la qualité d'image dans P_{F} unique du télescope selon un critère prédéterminé. Nous dénommons cette architecture 5MA pour « 5 Mirrors Anastigmat » en anglais. Typiquement le critère prédéterminé consiste à minimiser une erreur de forme d'onde WFE.

Les équations de Korsch permettent pour une focale donnée de trouver une solution aplanétique et anastigmat en calculant la position et la forme des miroirs M1, M2 et M3. Le calcul est rigoureux au centre du champ, mais moyennant une optimisation la qualité image peut être excellente dans le champ (généralement champ < 3°x0.5°).
Pour une solution monofocale, 3 miroirs sont nécessaires et suffisants pour supprimer l'aberration sphérique du 1er ordre, l'astigmatisme, la coma et la courbure de champ.
Cependant pour une solution multifocale, il n'est pas possible de résoudre les équations, même en déplaçant le miroir M3.
L'idée générale est d'obtenir un télescope selon l'invention dont l'ensemble des miroirs sont fixes (y compris le M3 qui pourrait constituer un moyen de changer la focale). Pour pouvoir figer la position du M3, ainsi que celle du détecteur D, tout en conservant une bonne qualité d'image pour f1 et f2, il est alors nécessaire de rajouter deux miroirs supplémentaires M4 et M5 à la combinaison optique, d'où l'architecture 5MA.
On passe alors d'une focale à l'autre en en changeant que les miroirs M4 et M5 en les escamotant du / positionnant dans le chemin optique en fonction de la focale souhaitée. Les combinaisons optiques sont complexifiées (5 miroirs asphériques au lieu de 3) afin de simplifier drastiquement le mécanisme de changement de focale.

Le calcul des combinaisons optiques du télescope10 selon l'invention est issu de l'application des équations de Korsch généralisées à n miroirs avec n=5. Dans son livre « Reflective Optics » D.Korsch présente un formalisme mathématique permettant dans des systèmes multi-miroirs d'exprimer les principales aberrations optiques (Aberration sphérique, coma, astigmatisme, courbure de champ) en fonction de paramètres simples tels que la distance entre les miroirs, la distance des objets et des images et le ratio des hauteurs des rayons. Ce formalisme simple et efficace permet de trouver des systèmes multi-miroirs aplanétique et anastigmat en résolvant quelques équations.
Par applications de ces équations on détermine des combinaisons OC1 et OC2 qui vérifient les propriétés précitées. L'image finale est non inversée et le diamètre de la pupille d'entrée est constante pour les 2 focales.

Un exemple de méthode de détermination des formes et positions des 7 miroirs du télescope 10 est donné plus loin.
Typiquement, on a M1 concave / M2 convexe / M3 concave / M4 convexe ou concave et presque plan (grand rayon de courbure)/ M5 convexe ou concave.

Le télescope selon l'invention présente ainsi la propriété remarquable de pouvoir changer de focale sans déplacement de miroir (telle une translation), par simple permutation entre M4₁ et M4₂, et entre M5₁ et M5₂, les autres miroirs M1/M2/M3 restant fixes.
En outre il présente une longueur optique (jusqu'au détecteur) égale pour les deux focales.

Le télescope 10 présente également pour les 2 focales les avantages classiques d'un Korsch : compacité, bonne qualité d'image, champ de vue accessible assez important...
En outre ce type de télescope d'architecture 100 % réflective présente l'avantage d'un fonctionnement indépendant de la longueur d'onde, les miroirs ne présentant pas de chromatisme. La bande spectrale de fonctionnement est alors déterminée par la nature du matériau réfléchissant des miroirs et la bande spectrale de sensibilité du premier détecteur.

On obtient un télescope de rapport au moins égal à 2.5, et les focales accessibles sont typiquement supérieures à 5m (généralement autour de 20 m pour la longue focale) une pupille supérieure à 300 mm et un champ de vue linéaire jusqu'à 5°x1°.

Pour une facilité de mise en œuvre, les premier et deuxième quatrième miroirs M4₁, M4₂ sont calculés de manière à être disposés sensiblement à une même position. De même pour les premier et deuxième cinquième miroirs M5₁, M5₂. Dans cette configuration, selon un mode de réalisation préféré M4₁ et M4₂ sont montés sur un premier support unique et/ou M5₁ et M5₂ sont montés sur un deuxième support unique. Préférentiellement, la commutation s'opère par rotation autour d'un axe du support selon un mécanisme dénommé « flip/flop ».

Préférentiellement le premier quatrième miroir M4₁ et le deuxième quatrième miroir M4₂ présentent un rayon de courbure supérieur à 1000 mm comme expliqué plus loin.

Pour des contraintes de compacité, selon un mode de réalisation le télescope 10 selon l'invention comprend un miroir de renvoi M_{R}.

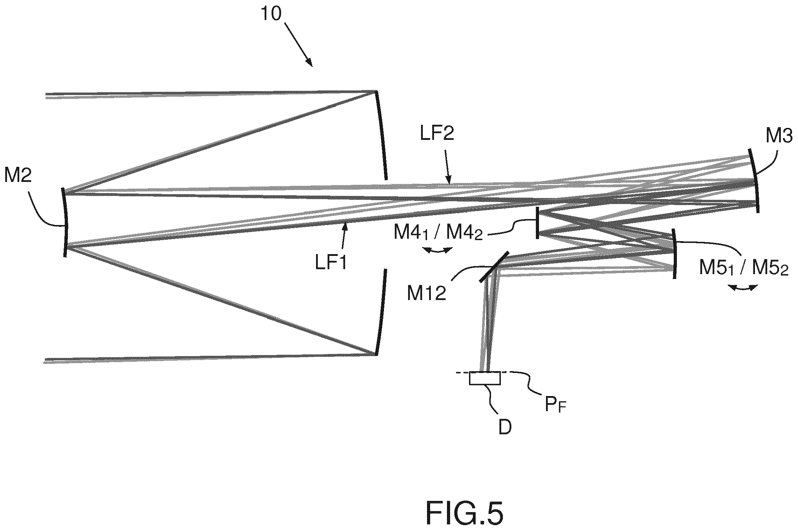

La figure 5 illustre un autre mode de réalisation dans lequel le miroir de renvoi M_{R} est disposé différemment.

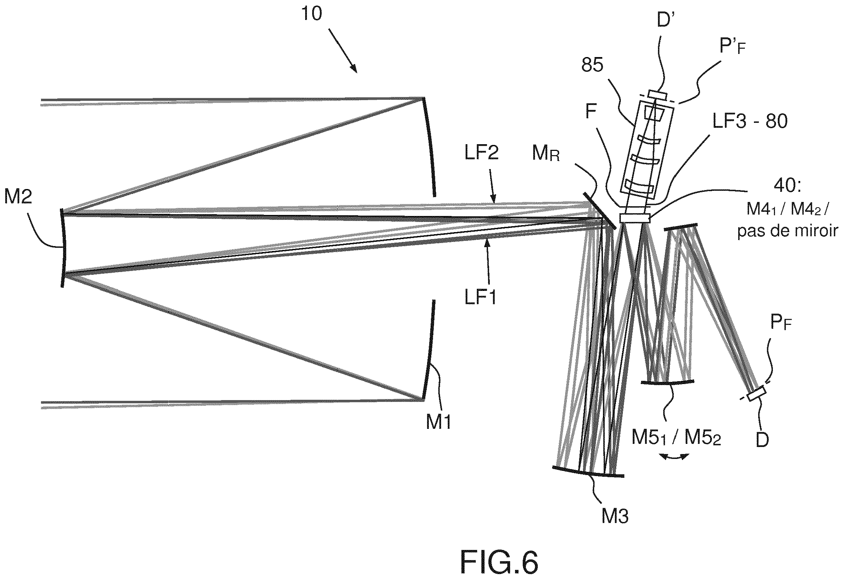

Selon une variante le télescope 10 comprend une voie additionnelle fonctionnant dans une plage de longueur d'onde différente de la plage de fonctionnement de la voie principale du télescope, dont un exemple d'architecture est illustré figure 6.
La voie principale bifocale fonctionne sur une première plage de longueur d'onde SB1, typiquement le visible entre 400 et 800 nm, et le premier détecteur D présente une sensibilité adaptée à SB1. La voie additionnelle fonctionne pour une deuxième bande spectrale SB2 différente de SB1, typiquement comprise dans la bande infrarouge.

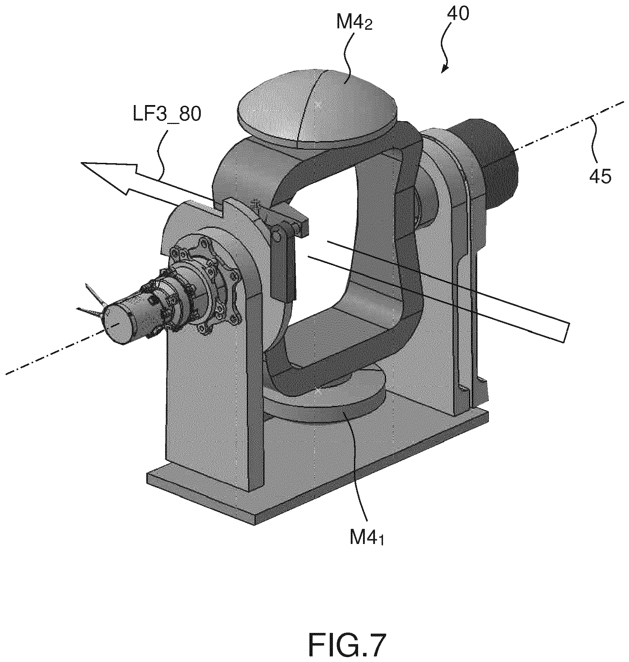

Le premier quatrième miroir M4₁ et le deuxième quatrième miroir M4₂ escamotables sont montés sur un support unique 40 dont un exemple est donné figure 7.
Ce support présente en outre une position neutre pour laquelle aucun des quatrième miroirs escamotables M4₁ et M4₂ ne figure sur le chemin optique du faisceau optique incident sur le support (simple trou sans fonction optique). Le faisceau passe alors au travers du support 40 pour former un faisceau lumineux LF3 selon un chemin optique secondaire 80, le chemin optique primaire étant celui suivi par la voie visible.
Selon l'exemple de la figure 7 le support 40 comprend trois positions, respectivement obtenue par pivotement autour d'un axe de rotation 45, les deux miroirs asphériques M4₁ et M4₂ étant montés autour d'une structure creuse. Dans une première position c'est M4₁ qui réfléchit le faisceau incident, dans une deuxième position c'est M4₂ qui réfléchit le faisceau incident, et dans une troisième position neutre le faisceau incident passe au travers du support. D'autres designs sont bien entendu possibles, comme une roue à barillets.
Ce télescope 10 multivoie comprend en outre un dispositif optique 85 disposé sur le chemin optique secondaire 80 et configuré pour former de l'image intermédiaire lint, en combinaison avec le troisième miroir M3, une image finale sur un deuxième plan focal P'_{F} du télescope correspondant à une focale choisie f'
Le dispositif optique 85 fonctionne préférentiellement en transmission dans la deuxième bande SB2, de manière à être compatible d'une valeur de focale choisie f' très inférieure à f1 et f2.

Le dispositif 85 est en outre configuré pour corriger les aberrations compensables du télescope et pour optimiser la qualité d'image dans le deuxième plan focal du télescope P'_{F} selon le critère prédéterminé.
Il rempli la même fonction compensatrice que les miroirs asphériques M4₁/M5₁, M4₂/M5₂. Il s'agit typiquement d'un objectif dioptrique composé de plusieurs lentilles. Du fait de la souplesse de design, les lentilles peuvent être sphériques tout en réalisant la fonction de compensation.
Un deuxième détecteur D' est disposé dans le deuxième plan focal du télescope P'_{F}, et présente une sensibilité dans la deuxième bande spectrale SB2. Un filtre spectral F est préférentiellement disposé sur le chemin optique secondaire, entre le support 40 et le deuxième détecteur D'pour sélectionner la bande spectrale SB2 et réfléchir la lumière hors SB2, pour éviter des lumières parasites.

On réalise ainsi une voie additionnelle avec une complexification mécanique faible.
Pour l'exemple d'un télescope 10 présentant une voie principale bifocale dans le visible et une voie additionnelle infrarouge monofocale embarqué sur un satellite, on cherche à obtenir une voie infrarouge de moindre résolution que la voie visible, mais de plus grand champ, ce qui est obtenu avec une focale f' plus faible, typiquement d'un facteur 10, par rapport à la plus courte focale entre f1 et f2. Par exemple une focale dans le visible de l'ordre de la dizaine de mètres et une focale IR de l'ordre du mètre.
La position du miroir M3 pour le fonctionnement en infrarouge étant identique, pour une des focales visibles f1 ou f2 une mesure simultanée visible / IR est possible.

Selon un autre aspect l'invention concerne un procédé 100 de détermination de combinaisons optiques d'un télescope bifocal anastigmat à cinq miroirs asphérique, le télescope comprenant un premier miroir M1, un second miroir M2 et un troisième miroir M3 et un premier détecteur D disposé dans un premier plan focal P_{F} communs à une première focale f1 et une deuxième focale f2 du télescope.

Le télescope comprend en outre un premier quatrième miroir M4₁ et un premier cinquième miroir M5₁ associés à f1, et un deuxième quatrième miroir M4₂ et un deuxième cinquième miroir M5₂ associés à f2.
Les formes et positions respectives des premier deuxième, troisième, premier quatrième et premier cinquième miroirs forment une première combinaison optique associée à la première focale : M1/M2/M3/M4₁/M5₁
Les formes et positions respectives des premier, deuxième, troisième, deuxième quatrième, et deuxième cinquième miroirs forment une deuxième combinaison optique associée à la deuxième focale : M1/M2/M3/M4₂/M5₂. Ces miroirs sont asphériques.

Le procédé 100 selon l'invention permet de déterminer la première combinaison optique OC1 et la deuxième combinaison optique OC2 associées respectivement à f1 et f2 du télescope 5MA, présentant les trois premiers miroirs M1/M2/M3 identiques, et un plan focal commun P_{F}.
Selon une variante préférée, les positions respectives de M4₁ et M4₂ sont identiques, ainsi que les positions respectives de M5₁ et M5₂. Cela permet comme vu plus haut d'effectuer le changement de focale par basculement d'un support unique pour chaque la quatrième et le cinquième miroir.

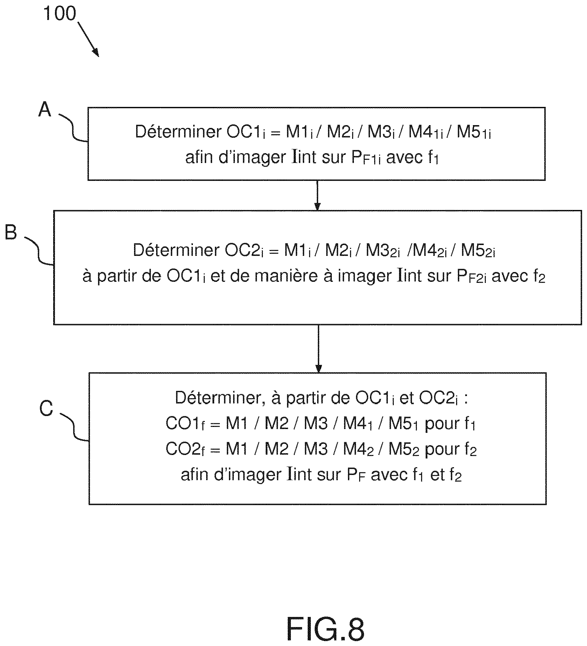

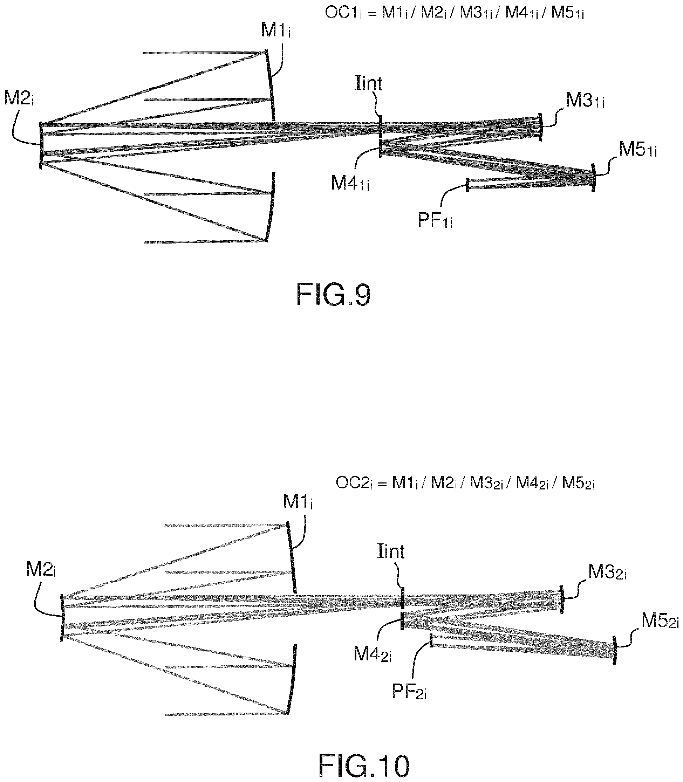

Le procédé 100 illustré figure 8 présente une première étape A consistant à déterminer, à partir des équations de Korsch généralisées à 5 miroirs, une première combinaison optique initiale OC1i pour la première focale f1 :
OC1i : M1ᵢ / M2ᵢ / M3₁ᵢ / M4_{1i /} M5₁ᵢ
Le premier miroir M1ᵢ est concave, le second miroir M2ᵢ est convexe, le troisième miroir M3₁ᵢ est concave. Le premier et le second miroir sont configurés de sorte qu'ils forment d'un objet à l'infini une image intermédiaire lint située entre le second miroir et le troisième miroir.
Le troisième M3₁ᵢ, le premier quatrième M4₁ᵢ et le premier cinquième M5₁ᵢ miroirs sont configurés pour former de ladite l'image intermédiaire lint une image dans un premier plan focal initial P_{F1i} du télescope en optimisant la qualité d'image dans ce premier plan focal initial P_{F1i} selon un critère prédéterminé. Préférentiellement le critère prédéterminé consiste à minimiser une erreur de forme d'onde WFE. Un exemple de cette première combinaison optique initiale est illustrée figure 9.

Il y a une pupille intermédiaire réelle proche de M4₁ᵢ. En effet afin de corriger efficacement les aberrations constantes dans le champ, le miroir M4₁ᵢ doit être placé proche de la pupille intermédiaire (ie l'image de la pupille d'entrée par M1 M2 et M3)

Un miroir asphérique est caractérisé par au mois un rayon de courbure (composante sphérique) et une conicité ou un ou plusieurs coefficient(s) d'asphéricité (composante asphérique). Lorsque le miroir devient proche d'un miroir plan (très grand rayon de courbure) il s'avère plus efficace de le caractériser par le coefficient d'asphéricité A plutôt que par une conicité. Préférentiellement pour accélérer les calculs la conicité des miroirs M4₁ᵢ et M5₁ᵢ (ou leur coefficient d'asphéricité) est fixée à 0, c'est-à-dire que ce sont des miroirs sphériques. En effet une asphéricité de ces miroirs n'est pas nécessaire pour que la première focale f1 soit aplanétique et anastigmate. Préférentiellement l'étape A est mise en œuvre pour la focale la plus longue, ici f1.

Dans une étape B on détermine, à partir de la première combinaison optique initiale OC1i et des équations de Korsch généralisées à 5 miroirs, une deuxième combinaison optique initiale OC2i pour la deuxième focale f2.
Le calcul s'effectue en partant de OC1i et en modifiant les formes et/ou les positions des troisième, premier quatrième et premier cinquième miroirs de OC1i déterminés à l'étape A de manière à former de l'image intermédiaire lint une image dans un deuxième plan focal initial P_{F2i} du télescope en optimisant la qualité d'image dans ce plan P_{F2i} selon le critère prédéterminé, avec un fonctionnement à une focale f2. Les positons et formes de M1i et M2i sont conservées identiques.
OC2i : M1ᵢ / M2ᵢ / M3₂ᵢ / M4₂ᵢ /M5₂ᵢ.
Le plan focal P_{F2i} est une conséquence du calcul par les équations de Korsch pour l'obtention d'une image aplanétique et anastigmate sans courbure de champ. Les variables de l'optimisation sont les paramètres des miroirs précités. Un exemple de deuxième combinaison initiale OC2i est illustré figure 10.

Préférentiellement dans cette étape B, les modifications consistent, pour le troisième miroir, en la modification de sa conique uniquement, c'est à dire pas de son rayon de courbure ni de sa position. On cherche en effet, à terme, à obtenir un miroir M3 unique pour les 2 focales, on vise donc une position et un rayon de courbure identiques à la focale f1, la conicité est quant à elle déterminée par les équations de Korsch

La figue 11 donne un exemple de calcul de valeurs de OC1i et OC2i pour un télescope bifocal présentant une pupille d'entrée de 500mm , une première focale f1 de 10m (longue) et une deuxième focale f2 de 6.7m .
La distance sur la ligne d'un miroir se lit comme étant la distance entre ce miroir et le suivant.

Ce calcul correspond à la variante pour laquelle on ne modifie que la conicité du M3 qui passe de -0.4 pour OC1i à -0.39 pour OC2i, le rayon de courbure et la positon (par rapport à M2) restant identiques. Le calcul est initialisé avec M4₁ᵢ et M5₁ᵢ sphériques.
Les éléments qui varient donc entre OC1i et OC2i sont la conicité du troisième miroir, les rayons de courbure des quatrièmes et cinquième miroirs ainsi que leur forme, qui devient asphérique, et la position du cinquième miroir qui se modifie légèrement. On choisit le coefficient d'asphéricité A pour caractériser l'asphéricité de M4₂ᵢ et M5₂ᵢ.

Enfin dans une étape C on détermine, à partir de la première combinaison optique initiale OC1i et de la deuxième combinaisons optiques initiales OC2i, une première combinaison optique finale OC1f et une deuxième combinaison optique finale OC2f par une boucle d'optimisation, avec la contrainte du premier, deuxième et troisième miroirs (M1, M2, M3) et du premier plan focal (P_{F}) communs aux deux focales (f1,f2), et de manière à optimiser la qualité d'image dans ledit premier plan focal (P_{F}) du télescope selon un critère prédéterminé. Dans l'optimisation les formes et positons de tous les miroirs peuvent varier par rapport aux points de départ OC1i et OC2i. Préférentiellement, car cela n'est pas utile, les positions de M1 et M2 ne sont pas modifiées.

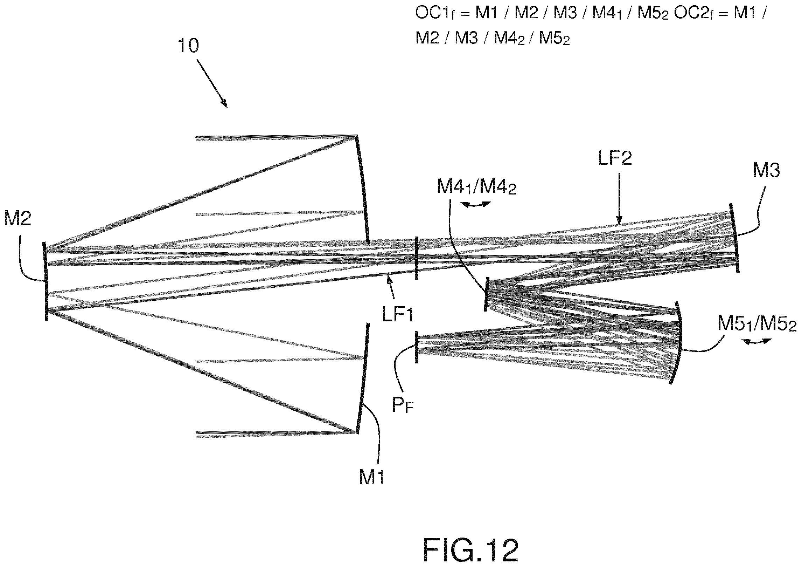

L'angle de champ (off axis) est adapté à chaque focale afin de pouvoir aménager les faisceaux optiques LF1 et LF2.
Un exemple de combinaison finale d'un télescope 10 selon l'invention issu du procédé 100 selon l'invention est donné figure 12.
Préférentiellement comme illustré figure 12, l'optimisation est réalisée avec la contrainte additionnelle des positions de M4₁ et M4₂ identiques, et les positions de M5₁ et M5₂ identiques, de manière à rendre le changement de focale plus aisé, par simple basculement du quatrième miroir entre M4₁ et M4₂ et du cinquième miroir entre M5₁ et M5₂, par rotation autour d'un axe (« flip/flop »).
Il s'agit ici, en utilisant comme point de départ les deux combinaisons initiales CO1i et CO2i, de déterminer par optimisation, les combinaisons finales OC1f et OC2f présentant la meilleures qualité d'image tout en partageant un plan focal commun P_{F} dans lequel est positionné le premier détecteur D. Cette optimisation s'effectue avec un logiciel de calcul optique classique de type CodeV ou Zemax permettant de minimiser la fonction d'erreur de la macro d'optimisation créée.

Selon un mode de réalisation le rayon de courbure de M4₁ associé à la plus longue focale est supérieur ou égal à 10000 mm.

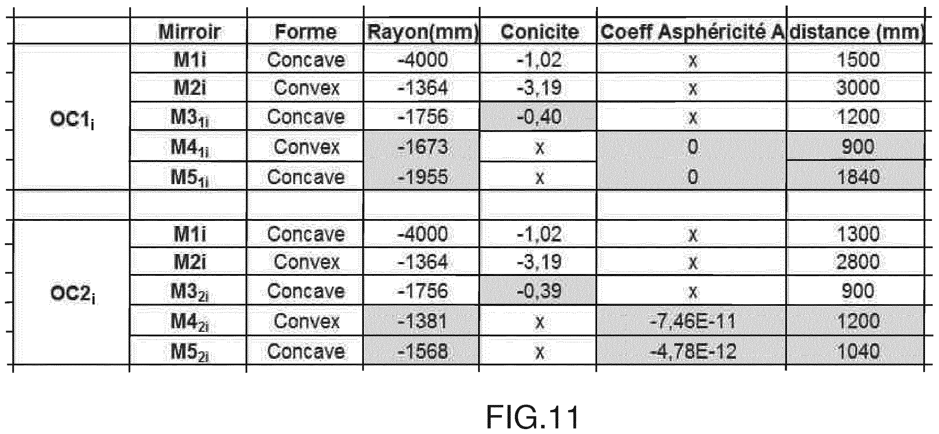

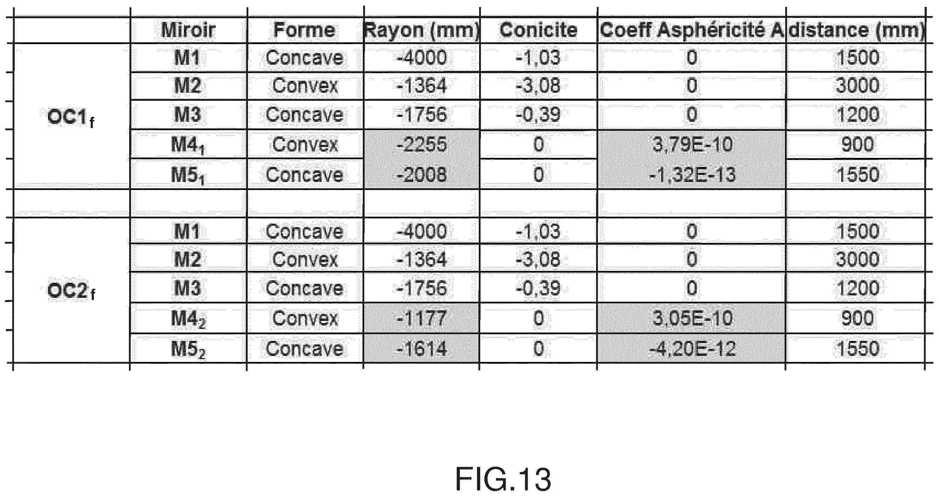

La figure 13 illustre des valeurs calculées pour les combinaisons CO1f et CO2f à partir des exemples de valeurs des combinaisons CO1i et CO2i de la figure 11.
On constate que les conicités des miroirs M1 et M2 ont très légèrement évoluées par rapport aux valeurs de M1i et M2i.
Plus généralement on aurait également pu avoir une légère variation des rayons de courbure de M1 et M2 et de la position de M3.
La conicité de M3 s'est stabilisée à -0.39. Plus généralement elle aurait pu évoluer plus nettement.
Les formes et positions de M4₁, M4₂, M5₁ et M5₂ ont également évoluées, les positons de M4₁ et M4₂ ayant été rendues égales lors de l'optimisation pour être compatible d'un support unique, de même pour les positions de M5₁ et M5₂.

## Revendications

1. Télescope anastigmat bifocal (10) à cinq miroirs asphériques comprenant :
- un premier miroir (M1) concave, un second miroir (M2) convexe, un troisième miroir (M3) concave et un premier détecteur (D), communs à une première (f1) et une deuxième (f2) focale du télescope,
- un premier quatrième miroir (M4₁) et un premier cinquième miroir (M5₁) associés à la première focale (f1), et un deuxième quatrième miroir (M4₂) et un deuxième cinquième miroir (M5₂) associés à la deuxième focale (f2),
le quatrième et le cinquième miroir associé à une focale étant escamotables, de manière à être disposés sur un chemin optique d'un faisceau correspondant à ladite focale associée lorsque le télescope fonctionne à ladite focale, et en dehors du chemin optique d'un faisceau correspondant à l'autre focale lorsque le télescope fonctionne à l'autre focale,
- les premier miroir (M1) et le second miroir (M2) étant agencés de manière à former d'un objet à l'infini une image intermédiaire (lint) située entre le second miroir (M2) et le troisième miroir (M3),
- et pour chaque focale :
* le troisième miroir ainsi que le quatrième et le cinquième miroir associés à ladite focale étant configurés pour former de cette image intermédiaire une image finale dans un premier plan focal (P_{F}) du télescope commun aux deux focales et dans lequel est placé le premier détecteur (D),
*les formes et positions fixes de chaque miroir étant déterminées à partir des équations de Korsch généralisées à 5 miroirs, avec la contrainte du premier, deuxième et troisième miroir (M1, M2, M3) et du premier plan focal (P_{F}) communs aux deux focales, et de manière à optimiser la qualité d'image dans le premier plan focal (P_{F}) du télescope selon un critère prédéterminé.

2. Télescope selon la revendication 1 dans lequel les premier et deuxième quatrième miroirs (M4₁, M4₂) sont disposés sensiblement à une même position, et/ou dans lequel les premier et deuxième cinquième miroirs (M5₁, M5₂) sont disposés sensiblement à une même position.

3. Télescope selon la revendication 2 dans lequel les premier et deuxième quatrième miroirs (M4₁, M4₂) sont montés sur un premier support unique, la commutation s'opérant par rotation autour d'un premier axe, et/ou dans lequel les premier et deuxième cinquième miroirs (M5₁, M5₂) sont montés sur un deuxième support unique, la commutation s'opérant par rotation autour d'un deuxième axe.

4. Télescope selon l'une des revendications précédentes dans lequel le premier quatrième miroir (M4₁) et le deuxième quatrième miroir (M4₂) présentent un rayon de courbure supérieur à 1000 mm.

5. Télescope selon l'une des revendications précédentes dans lequel le critère prédéterminé consiste à minimiser une erreur de forme d'onde (WFE).

6. Télescope selon l'une des revendications précédentes dans lequel lesdits premier et deuxième quatrième miroirs escamotables (M4₁, M4₂) sont montés sur un support unique (40), ledit support comprenant en outre une position pour laquelle aucun des quatrième miroir escamotable ne figure sur le chemin optique du faisceau incident sur ledit support, le faisceau passant alors au travers du support selon un chemin optique secondaire (80), le télescope comprenant en outre :
- un dispositif optique (85) disposé sur le chemin optique secondaire (80), le dispositif optique (85) étant configuré pour former de ladite image intermédiaire, en combinaison avec le troisième miroir (M3), une image finale sur un deuxième plan focal (P'_{F}) du télescope correspondant à une focale choisie (f') et pour optimiser la qualité d'image dans le deuxième plan focal (P'_{F}) selon ledit critère prédéterminé,
- et comprenant en outre un deuxième détecteur (D') disposé dans le deuxième plan focal du télescope (P'_{F}), et sensible dans une deuxième bande spectrale (SB2) différente d'une première bande spectrale de sensibilité (SB1) du premier détecteur.

7. Télescope selon la revendication 6 dans lequel le dispositif optique (85) fonctionne en transmission dans la deuxième bande spectrale (SB2).

8. Télescope selon les revendications 6 ou 7 dans lequel la première bande spectrale (SB1) est comprise dans le visible et la deuxième bande spectrale (SB2) est comprise dans l'infrarouge.

9. Télescope selon l'une des revendications 6 à 8 dans lequel la focale choisie (f') présente une valeur inférieure aux première et deuxième focales.

10. Procédé de détermination de combinaisons optiques d'un télescope bifocal anastigmat à cinq miroirs asphérique, le télescope comprenant :
- un premier miroir (M1), un second miroir (M2) et un troisième miroir (M3) et un premier détecteur (D) disposé dans un premier plan focal (P_{F}) communs à une première (f1) et une deuxième (f2) focale du télescope,
- un premier quatrième miroir (M4₁) et un premier cinquième miroir (M5₁) associés à la première focale (f1), les formes et positions respectives des premier (M1), deuxième (M2), troisième (M3), premier quatrième (M4₁) et premier cinquième (M5₁) miroirs étant fixes et formant une première combinaison optique associée à la première focale,
- un deuxième quatrième miroir (M4₂) et un deuxième cinquième miroir (M5₂) associés à une deuxième focale (f2), les formes et positions respectives des premier (M1), deuxième (M2), troisième (M3), deuxième quatrième (M4₂) et deuxième cinquième (M5₂) miroirs étant fixes et formant une deuxième combinaison optique (OC2f) associée à la deuxième focale,
le procédé comprenant les étapes consistant à :
- A déterminer, à partir des équations de Korsch généralisées à 5 miroirs, une première combinaison optique initiale (OC1i) pour la première focale (f1),
le premier miroir (M1₁ᵢ) étant concave, le second miroir (M2₁ᵢ) étant convexe, le troisième miroir (M3₁ᵢ) étant concave, le premier (M1) et le second (M2) miroirs étant configurés de sorte qu'ils forment d'un objet à l'infini une image intermédiaire (lint) située entre le second miroir et le troisième miroir,
le troisième (M3₁ᵢ), le premier quatrième (M4₁ᵢ) et le premier cinquième (M5₁ᵢ) miroirs étant configurés pour former de ladite image intermédiaire (lint) une image dans un premier plan focal initial (P_{F1i}) du télescope en optimisant la qualité d'image dans ledit premier plan focal initial (P_{F1i}) selon un critère prédéterminé,
- B déterminer, à partir de la première combinaison optique initiale (OC1i) et des équations de Korsch généralisées à 5 miroirs, une deuxième combinaison optique initiale (OC2i) pour la deuxième focale (f2), en modifiant les formes et/ou les positions desdits troisième, premier quatrième et premier cinquième miroirs déterminés à l'étape A, de manière à former de ladite image intermédiaire (lint) une image dans un deuxième plan focal initial (P_{F2i}) du télescope en optimisant la qualité d'image dans ledit deuxième plan focal initial (P_{F2i}) selon ledit critère prédéterminé,
- C déterminer, à partir des première (OC1i) et deuxième (OC2i) combinaisons optiques initiales, une première (OC1f) et une deuxième (OC2f) combinaison optique finale par une boucle d'optimisation, avec la contrainte du premier, deuxième et troisième miroirs (M1, M2, M3) et du premier plan focal (P_{F}) communs aux deux focales (f1,f2), et de manière à optimiser la qualité d'image dans ledit premier plan focal (P_{F}) du télescope selon un critère prédéterminé.

11. Procédé selon la revendication 10 dans lequel les formes respectives du premier quatrième (M4₁ᵢ) et du premier cinquième (M5₁ᵢ) miroirs déterminés à l'étape A sont imposées sphériques.

12. Procédé selon les revendications 10 ou 11 dans lequel la première focale est la focale la plus longue.

13. Procédé selon l'une des revendications 10 à 12 dans lequel une forme de miroir est définie par au moins un rayon de courbure et une conique, et dans lequel les modifications de l'étape B consistent, pour le troisième miroir, en la modification de sa conique uniquement, soit sans modifier son rayon de courbure ni sa position.

14. Procédé selon l'une des revendications 10 à 13 dans lequel l'étape C s'effectue avec la contrainte additionnelle des positions des premiers (M4₁) et deuxième (M4₂) quatrième miroirs égales, et des positions des premiers (M5₁) et deuxième (M5₂) cinquième miroirs égales.

15. Procédé selon l'une des revendications 10 à 14 dans lequel le critère prédéterminé consiste à minimiser une erreur de forme d'onde (WFE).

## Patentansprüche

1. Fünfspiegeliges anastigmatisches bifokales (10) Teleskop, Folgendes beinhaltend:
- einen ersten konkaven Spiegel (M1), einen zweiten konvexen Spiegel (M2), einen dritten konkaven Spiegel (M3) und einen ersten Detektor (D), welche einer ersten (f1) und einer zweiten (f2) Brennweite des Teleskops gemeinsam sind,
- einen ersten vierten Spiegel (M4₁) und einen ersten fünften Spiegel (M5₁), welche der ersten Brennweite (f1) zugeordnet sind, und einen zweiten vierten Spiegel (M4₂) und einen zweiten fünften Spiegel (M5₂), welche der zweiten Brennweite (f2) zugeordnet sind,
wobei der einer Brennweite zugeordnete vierte und fünfte Spiegel abnehmbar sind, sodass sie in einem Strahlengang eines der Brennweite entsprechenden Strahls angeordnet sind, wenn das Teleskop mit dieser Brennweite arbeitet, und außerhalb des Strahlenganges eines Strahls, welcher der anderen Brennweite entspricht, wenn das Teleskop mit der anderen Brennweite arbeitet,
- wobei der erste Spiegel (M1) und der zweite Spiegel (M2) angeordnet sind, um von einem Objekt unendlich ein Zwischenbild (Iint) zu erzeugen, welches sich zwischen dem zweiten Spiegel (M2) und dem dritten Spiegel (M3) befindet,
- und wobei für jede Brennweite:
* der dritte Spiegel sowie der vierte und der fünfte Spiegel, welche der Brennweite zugeordnet sind, konfiguriert sind, um aus diesem Zwischenbild ein endgültiges Bild in einer ersten Brennebene (P_{F}) des Teleskops zu erzeugen, welche den beiden Brennweiten gemeinsam ist, und in welcher der erste Detektor (D) platziert ist,
* die festen Formen und Positionen jedes Spiegels anhand der über fünf Spiegel generalisierten Korsch-Gleichungen bestimmt werden, mit der Erschwernis, dass der erste, der zweite und der dritte Spiegel (M1, M2, M3) und die erste Brennebene (P_{F}) beiden Brennweiten gemeinsam sind, und um die Bildqualität in der ersten Brennebene (P_{F}) des Teleskops gemäß einem vorbestimmten Kriterium zu optimieren.

2. Teleskop nach Anspruch 1, bei welchem der erste und der zweite vierte Spiegel (M4₁, M4₂) an einer im Wesentlichen gleichen Position angeordnet sind und/oder bei welchem der erste und der zweite fünfte Spiegel (M5₁, M5₂) an einer im Wesentlichen gleichen Position angeordnet sind.

3. Teleskop nach Anspruch 2, bei welchem der erste und der zweite vierte Spiegel (M4₁, M4₂) auf einer ersten einzigen Halterung montiert sind, wobei die Umschaltung durch Rotation um eine erste Achse erfolgt, und/oder bei welchem der erste und der zweite fünfte Spiegel (M5₁, M5₂) auf einer zweiten einzigen Halterung montiert sind, wobei die Umschaltung durch Rotation um eine zweite Achse erfolgt.

4. Teleskop nach einem der vorhergehenden Ansprüche, bei welchem der erste vierte Spiegel (M4₁) und der zweite vierte Spiegel (M4₂) einen Krümmungsradius über 1.000 mm aufweisen.

5. Teleskop nach einem der vorhergehenden Ansprüche, bei welchem das vorbestimmte Kriterium darin besteht, einen Wellenformfehler (WFE) zu minimieren.

6. Teleskop nach einem der vorhergehenden Ansprüche, bei welchem der erste und der zweite abnehmbare vierte Spiegel (M4₁, M4₂) auf einer einzigen Halterung (40) montiert sind, wobei die Halterung ferner eine Position beinhaltet, für welche keiner der abnehmbaren vierten Spiegel im Strahlengang des einfallenden Strahls auf der Halterung steht, wobei der Strahl dann durch die Halterung entlang eines zweiten Strahlenganges (80) hindurchgeht, wobei das Teleskop ferner Folgendes beinhaltet:
- eine optische Vorrichtung (85), welche in dem sekundären Strahlengang (80) angeordnet ist, wobei die optische Vorrichtung (85) konfiguriert ist, um aus dem Zwischenbild in Kombination mit dem dritten Spiegel (M3) ein endgültiges Bild in einer zweiten Brennebene (P'_{F}) des Teleskops zu erzeugen, welche einer gewählten Brennweite (f) entspricht, und um die Bildqualität in der zweiten Brennebene (P'_{F}) gemäß dem vorbestimmten Kriterium zu optimieren,
- und ferner beinhaltend einen zweiten Detektor (D'), welcher in der zweiten Brennebene des Teleskops (P'_{F}) angeordnet und in einem zweiten Spektralband (SB2) empfindlich ist, welches sich von einem Empfindlichkeits-Spektralband (SB1) des ersten Detektors unterscheidet.

7. Teleskop nach Anspruch 6, bei welchem die optische Vorrichtung (85) in Übertragung in dem zweiten Spektralband (SB2) arbeitet.

8. Teleskop nach einem der Ansprüche 6 oder 7, bei welchem das erste Spektralband (SB1) im sichtbaren Bereich enthalten ist, und das zweite Spektralband (SB2) im Infrarotbereich enthalten ist.

9. Teleskop nach einem der Ansprüche 6 bis 8, bei welchem die gewählte Brennweite (f) einen Wert aufweist, welcher geringer ist als derjenige der ersten und der zweiten Brennweite.

10. Verfahren zum Bestimmen von optischen Kombinationen eines bifokalen, anastigmatischen, Teleskops mit fünf asphärischen Spiegeln, wobei das Teleskop Folgendes beinhaltet:
- einen ersten Spiegel (M1), einen zweiten Spiegel (M2) und einen dritten Spiegel (M3) und einen ersten Detektor (D), welcher in einer ersten Brennebene (P_{F}) angeordnet ist, welche einer ersten (f1) und einer zweiten (f2) Brennweite des Teleskops gemeinsam sind,
- einen ersten vierten Spiegel (M4₁) und einen ersten fünften Spiegel (M5₁), welche der ersten Brennweite (f1) zugeordnet sind, wobei die jeweiligen Formen und Positionen des ersten (M1), des zweiten (M2), des dritten (M3), des ersten vierten (M4₁) und des ersten fünften (M5₁) Spiegels fest sind und eine erste optische Kombination bilden, welche der ersten Brennweite zugeordnet ist,
- einen zweiten vierten Spiegel (M4₂) und einen zweiten fünften Spiegel (M5₂), welche einer zweiten Brennweite (f2) zugeordnet sind, wobei die jeweiligen Formen und Positionen des ersten (M1), des zweiten (M2), des dritten (M3), des zweiten vierten (M4₂) und des zweiten fünften (M5₂) Spiegels fest sind und eine zweite optische Kombination (OC2f) bilden, welche der zweiten Brennweite zugeordnet ist,
wobei das Verfahren folgende Schritte beinhaltet:
- A Bestimmen, anhand der über fünf Spiegel generalisierten Korsch-Gleichungen, einer ersten optischen Ausgangskombination (OC1i) für die erste Brennweite (f1),
wobei der erste Spiegel (M1₁ᵢ) konkav ist, der zweite Spiegel (M2₁ᵢ) konvex ist, der dritte Spiegel (M3₁ᵢ) konkav ist, der erste (M1) und der zweite (M2) Spiegel so konfiguriert sind, dass sie von einem Objekt unendlich ein Zwischenbild (Iint) erzeugen, welches sich zwischen dem zweiten Spiegel und dem dritten Spiel befindet,
wobei der dritte (M3₁ᵢ), der erste vierte (M4₁ᵢ) und der erste fünfte (M5₁ᵢ) Spiegel konfiguriert sind, um aus dem Zwischenbild (Iint) ein Bild in einer ersten Ausgangsbrennebene (P_{F1i}) das Teleskops zu erzeugen, indem sie die Bildqualität in der ersten Ausgangsbrennebene (P_{F1i}) gemäß einem vorbestimmten Kriterium optimieren,
- B Bestimmen, anhand der ersten optischen Ausgangskombination (OC1i) und der über fünf Spiegel generalisierten Korsch-Gleichungen, einer zweiten optischen Ausgangskombination (OC2i) für die zweite Brennweite (f2), durch Verändern der Formen und/oder der Positionen des dritten, des ersten vierten und des ersten fünften Spiegels, welche im Schritt A bestimmt wurden, um so aus dem Zwischenbild (Iint) ein Bild in einer zweiten Ausgangsbrennebene (P_{F2i}) des Teleskops zu erzeugen, indem die Bildqualität in der zweiten Ausgangsbrennebene (P_{F21}) gemäß dem vorbestimmten Kriterium optimiert wird,
- C Bestimmen, anhand der ersten (OC1i) und der zweiten (OC2i) optischen Ausgangskombination, einer ersten (OC1f) und einer zweiten (OC2f) endgültigen optischen Kombination durch eine Optimierungsschleife, mit der Erschwernis, dass der erste, der zweite und der dritte Spiegel (M1, M2, M3) und die erste Brennebene (P_{F}) beiden Brennweiten (fl,f2) gemeinsam sind, und um die Bildqualität in der ersten Brennebene (P_{F}) des Teleskops gemäß einem vorbestimmten Kriterium zu optimieren.

11. Verfahren nach Anspruch 10, bei welchem die jeweiligen Formen des ersten vierten (M4₁ᵢ) und des ersten fünften (M5₁ᵢ) Spiegels, welche im Schritt A bestimmt wurden, als sphärisch auferlegt sind.

12. Verfahren nach Anspruch 10 oder 11, bei welchem die erste Brennweite die längste Brennweite ist.

13. Verfahren nach einem der Ansprüche 10 bis 12, bei welchem eine Spiegelform durch mindestens einen Krümmungsradius und einen Kegelschnitt definiert ist, und bei welchem die Änderungen des Schrittes B für den dritten Spiegel darin bestehen, nur seinen Kegelschnitt zu verändern, d. h., ohne seinen Krümmungsradius oder seine Position zu verändern.

14. Verfahren nach einem der Ansprüche 10 bis 13, bei welchem Schritt C mit der zusätzlichen Erschwernis gleicher Positionen des ersten (M4₁) und des zweiten (M4₂) vierten Spiegels, und gleicher Positionen des ersten (M5₁) und des zweiten (M5₂) fünften Spiegels bewerkstelligt wird.

15. Verfahren nach einem der Ansprüche 10 bis 14, bei welchem das vorbestimmte Kriterium darin besteht, einen Wellenformfehler (WFE) zu minimieren.

## Claims

1. Bifocal anastigmatic telescope (10) with five aspherical mirrors, comprising:
- a first concave mirror (M1), a second convex mirror (M2), a third concave mirror (M3) and a first detector (D), which are common to a first (f1) and a second (f2) focal length of the telescope,
- a first fourth mirror (M4₁) and a first fifth mirror (M5₁) that are associated with the first focal length (f1), and a second fourth mirror (M4₂) and a second fifth mirror (M5₂) that are associated with the second focal length (f2),
the fourth and the fifth mirror associated with a focal length being retractable, so as to be positioned on an optical path of a beam corresponding to said associated focal length when the telescope is operating at said focal length, and outside of the optical path of a beam corresponding to the other focal length when the telescope is operating at the other focal length,
- the first mirror (M1) and the second mirror (M2) being arranged so as to form, from an object at infinity, an intermediate image (lint) situated between the second mirror (M2) and the third mirror (M3),
- and for each focal length:
* the third mirror as well as the fourth and the fifth mirror that are associated with said focal length being configured to form, from this intermediate image, a final image in a first focal plane (P_{F}) of the telescope that is common to the two focal lengths and in which the first detector (D) is positioned,
* the fixed positions and forms of each mirror being determined from the generalized Korsch equations with 5 mirrors, with the constraint of the first, second and third mirror (M1, M2, M3) and of the first focal plane (P_{F}) that are common to the two focal lengths, and so as to optimize the image quality in the first focal plane (P_{F}) of the telescope in accordance with a predetermined criterion.

2. Telescope according to Claim 1, wherein the first and second fourth mirrors (M4₁, M4₂) are positioned substantially at one and the same position, and/or wherein the first and second fifth mirrors (M5₁, M5₂) are positioned substantially at one and the same position.

3. Telescope according to Claim 2, wherein the first and second fourth mirrors (M4₁, M4₂) are mounted on a first single carrier, the switch taking place through rotation about a first axis, and/or wherein the first and second fifth mirrors (M5₁, M5₂) are mounted on a second single carrier, the switch taking place through rotation about a second axis.

4. Telescope according to one of the preceding claims, wherein the first fourth mirror (M4₁) and the second fourth mirror (M4₂) have a radius of curvature greater than 1000 mm.

5. Telescope according to one of the preceding claims, wherein the predetermined criterion consists in minimizing a wavefront error (WFE).

6. Telescope according to one of the preceding claims, wherein said first and second retractable fourth mirrors (M4₁, M4₂) are mounted on a single carrier (40), said carrier furthermore comprising a position in which none of the retractable fourth mirrors is located on the optical path of the beam incident on said carrier, the beam then passing through the carrier along a secondary optical path (80), the telescope furthermore comprising:
- an optical device (85) positioned on the secondary optical path (80), the optical device (85) being configured to form, from said intermediate image, in combination with the third mirror (M3), a final image on a second focal plane (P'_{F}) of the telescope corresponding to a chosen focal length (f') and to optimize the image quality in the second focal plane (P'_{F}) in accordance with said predetermined criterion,
- and furthermore comprising a second detector (D') positioned in the second focal plane (P'_{F}) of the telescope, and sensitive in a second spectral band (SB2) that is different from a first spectral band (SB1) of sensitivity of the first detector.

7. Telescope according to Claim 6, wherein the optical device (85) operates in transmission mode in the second spectral band (SB2).

8. Telescope according to Claim 6 or 7, wherein the first spectral band (SB1) is contained in the visible and the second spectral band (SB2) is contained in the infrared.

9. Telescope according to one of Claims 6 to 8, wherein the chosen focal length (f') has a value less than the first and second focal lengths.

10. Method for determining optical combinations of a bifocal anastigmatic telescope with five aspherical mirrors, the telescope comprising:
- a first mirror (M1), a second mirror (M2) and a third mirror (M3) and a first detector (D) positioned in a first focal plane (P_{F}) that are common to a first (f1) and a second (f2) focal length of the telescope,
- a first fourth mirror (M4₁) and a first fifth mirror (M5₁) that are associated with the first focal length (f1), the respective forms and positions of the first (M1), second (M2), third (M3), first fourth (M4₁) and first fifth (M5₁) mirrors being fixed and forming a first optical combination associated with the first focal length,
- a second fourth mirror (M4₂) and a second fifth mirror (M5₂) that are associated with a second focal length (f2), the respective forms and positions of the first (M1), second (M2), third (M3), second fourth (M4₂) and second fifth (M5₂) mirrors being fixed and forming a second optical combination (OC2f) associated with the second focal length,
the method comprising steps consisting in:
- A determining, from the generalized Korsch equations with 5 mirrors, a first initial optical combination (OC1i) for the first focal length (f1),
the first mirror (M1₁ᵢ) being concave, the second mirror (M2₁ᵢ) being convex, the third mirror (M3₁ᵢ) being concave, the first (M1) and the second (M2) mirrors being configured such that they form, from an object at infinity, an intermediate image (lint) situated between the second mirror and the third mirror,
the third (M3₁ᵢ), the first fourth (M4₁ᵢ) and the first fifth (M5₁ᵢ) mirrors being configured to form, from said intermediate image (lint), an image in a first initial focal plane (P_{F1i}) of the telescope by optimizing the image quality in said first initial focal plane (P_{F1i}) in accordance with a predetermined criterion,
- B determining, from the first initial optical combination (OC1i) and from the generalized Korsch equations with 5 mirrors, a second initial optical combination (OC2i) for the second focal length (f2), by modifying the forms and/or the positions of said third, first fourth and first fifth mirrors that are determined in step A, so as to form, from said intermediate image (lint), an image in a second initial focal plane (P_{F2i}) of the telescope by optimizing the image quality in said second initial focal plane (P_{F2i}) in accordance with said predetermined criterion,
- C determining, from the first (OC1i) and second (OC2i) initial optical combinations, a first (OC1f) and a second (OC2f) final optical combination through an optimization loop, with the constraint of the first, second and third mirrors (M1, M2, M3) and of the first focal plane (P_{F}) that are common to the two focal lengths (f1, f2), and so as to optimize the image quality in said first focal plane (P_{F}) of the telescope in accordance with a predetermined criterion.

11. Method according to Claim 10, wherein the respective forms of the first fourth (M4₁ᵢ) and of the first fifth (M5₁ᵢ) mirrors that are determined in step A are mandatorily spherical.

12. Method according to Claim 10 or 11, wherein the first focal length is the longest focal length.

13. Method according to one of Claims 10 to 12, wherein a mirror form is defined by at least one radius of curvature and a conicity, and wherein the modifications of step B consist, for the third mirror, in modifying only its conicity, that is to say without modifying its radius of curvature or its position.

14. Method according to one of Claims 10 to 13, wherein step C is performed with the additional constraint of the positions of the first (M4₁) and second (M4₂) fourth mirrors being equal, and the positions of the first (M5₁) and second (M5₂) fifth mirrors being equal.

15. Method according to one of Claims 10 to 14, wherein the predetermined criterion consists in minimizing a wavefront error (WFE).
